# EUROPEAN PATENT APPLICATION

(11) **EP 1 650 970 A1**
(43) Date of publication of application: **26.04.2006**
(21) Application number: 05001815.9
(22) Date of filing: 28.01.2005
(51) Int. Cl.: H04N 7/167, H04N 5/913

(54) **Apparatus and method for controlling recording operation**

(30) Priority: 19.10.2004 KR 2004083649
(71) Applicant: Topfield Co., Ltd., Seongnam-si Gyeonggi-do (KR)
(72) Inventor: Kim, Jong-Won, Seongnam Kyonggi-do (KR)
(74) Representative: Grünecker, Kinkeldey, Stockmair & Schwanhäusser Anwaltssozietät

(57) **Abstract**

A record control apparatus for use in a broadcast signal receiver including a stream storage unit descrambles a scrambled record file, and records the descrambled record file. The apparatus includes: a broadcast stream record/reproduction controller for controlling recording/reproducing operations of a scrambled broadcast stream, and storing information indicative of a reproduction stop point when reproduction of the scrambled record broadcast stream is halted; a descrambler for descrambling a reproduced broadcast stream; a reproduction stream record/reproduction controller for controlling recording/reproducing operations of the broadcast stream descrambled by the descrambler; and a broadcast stream reproduction restarting request unit for requesting a reproduction restarting operation of the reproduction-halted broadcast stream from the reproduction stop point when the descrambler can be used to descramble the reproduction-halted record broadcast stream.

## Description

### BACKGROUND OF THE INVENTION

### Field of the Invention

The present invention relates to a broadcast signal receiver such as a set top box (STB), and more particularly to an apparatus and method for descrambling a scrambled record file and re-recording the descrambled record file.

### Description of the Related Art

Typically, an STB is indicative of a broadcast signal receiver located on a TV set. The STB may include two descramblers capable of allowing a user to view data of a single pay-for-use broadcast channel simultaneously with recording data of the other pay-for-use broadcast channel, and may also include only one descrambler.

The broadcast signal receiver including only one descrambler first descrambles a pay-for-use stream received from a viewing channel using a descrambler, and at the same time records the other pay-for-use stream received from a recording channel according to a scrambled format, such that it descrambles the recorded pay-for-use stream using the descrambler when reproducing the recorded pay-for-use stream at a later time.

Provided that a user repeatedly views the recorded broadcast stream scrambled by the broadcast signal receiver, the user must use a descrambler whenever he or she wishes to view the recorded broadcast stream, such that the viewing of the other broadcast channel data requiring the same descrambler may be unavoidably limited. In order to solve the above-mentioned problem, an improved broadcast signal receiver capable of descrambling a recorded broadcast stream using a descrambler simultaneously with recording the descrambled broadcast stream has recently been proposed.

However, the above-mentioned improved broadcast signal receiver has a disadvantage in that it is unable to use the descrambler to view the other pay-for-use broadcast channel data while descrambling the scrambled record broadcast stream using a descrambler simultaneously with recording the descrambled record broadcast stream. In more detail, although the above-mentioned improved broadcast signal receiver stops reproduction of the scrambled record broadcast stream data, and allows a user to view a broadcast stream of another pay-for-use broadcast channel using a descrambler, it has a disadvantage in that it must reproduce the scrambled record broadcast stream from a start point simultaneously with recording the same scrambled record broadcast stream.

### SUMMARY OF THE INVENTION

Therefore, the present invention has been made in view of the above problems, and it is an object of the present invention to provide an apparatus and method for controlling a recording operation, which can begin reproduction of a scrambled record file stream from a reproduction stop point at a later time although the scrambled record file stream halts reproduction when it is descrambled/copied, such that it can generate a copied file corresponding to the record broadcast stream.

It is another object of the present invention to provide an apparatus and method for controlling a recording operation, which automatically performs a data reproduction restarting operation from a reproduction stop point of a scrambled record broadcast stream, or selectively performs the data reproduction restarting operation according to a user's command.

It is yet another object of the present invention to provide an apparatus and method for controlling a recording operation, which descrambles a scrambled record broadcast stream from a start point using a background processing method, and at the same time records the same scrambled record broadcast stream.

In accordance with one aspect of the present invention, the above and other objects can be accomplished by the provision of a record control apparatus for use in a broadcast signal receiver including a stream storage unit comprising: a broadcast stream record/reproduction controller for controlling recording/reproducing operations of a scrambled broadcast stream, and storing information indicative of a reproduction stop point when reproduction of the scrambled record broadcast stream is halted; a descrambler for descrambling a reproduced broadcast stream; a reproduction stream record/reproduction controller for controlling recording/reproducing operations of the broadcast stream descrambled by the descrambler; and a broadcast stream reproduction restarting request unit for requesting a reproduction restarting operation of the reproduction-halted broadcast stream from the reproduction stop point when the descrambler can be used to descramble the reproduction-halted record broadcast stream.

Preferably, the broadcast stream reproduction restarting request unit receives a reproduction restarting command of the reproduction-halted broadcast stream from a user interface, and requests a reproduction restarting operation of the reproduction-halted broadcast stream from the reproduction stop point in response to the received reproduction restarting command.

In accordance with another aspect of the present invention, there is provided a record control method for use in a broadcast signal receiver including a broadcast stream storage unit comprising the steps of: a) reproducing a scrambled record broadcast stream, and descrambling the reproduced broadcast stream using a descrambler; b) recording the descrambled broadcast stream as a copy file; c) stopping reproduction of the broadcast stream according to a user's request, and storing information indicative of a stop point of the reproduction; and d) starting reproduction of the reproduction-halted broadcast stream from the reproduction stop point to acquire a stream, descrambling the acquired stream using the descrambler, and recording the descrambled broadcast stream as a part of the copy file.

Therefore, an apparatus and method for controlling a recording operation according to the present invention begins reproduction of a scrambled record file stream from a reproduction stop point at a later time simultaneously with creating a single descrambled copy file although the reproduction of the scrambled record file stream is halted by a user while the scrambled record file is descrambled/copied, such that an improved system, capable of minimizing the number of set manipulations from the viewpoint of the user, minimizing the number of components contained in a system from the viewpoint of a manufacturer of the system, and supporting a variety of functions, can be implemented.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram illustrating a broadcast signal receiver including a record control device in accordance with a preferred embodiment of the present invention; and
Fig. 2 is a flow chart illustrating a record control method in accordance with a preferred embodiment of the present invention.

### DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

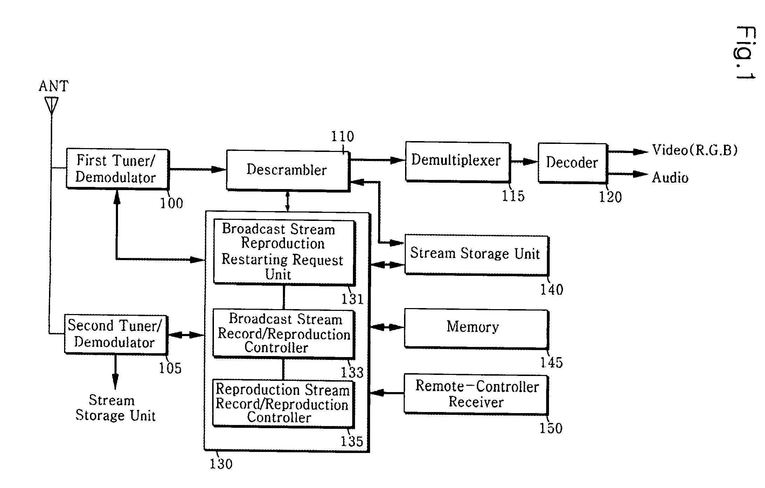

Fig. 1 is a block diagram illustrating a broadcast signal receiver including a record control device in accordance with a preferred embodiment of the present invention. In more detail, an STB capable of selecting two channels at the same time is partially shown in Fig. 1.

Referring to Fig. 1, a tuner contained in a first tuner/demodulator unit 100 receives a broadcast signal from a broadcast station, and outputs a broadcast signal selected by a system controller 130 to be described later, and a demodulator contained in the first tuner/demodulator unit 100 demodulates a broadcast signal selected by the tuner to acquire a broadcast stream, and outputs the acquired broadcast stream.

The first tuner/demodulator 100 may be referred to as a tuner/demodulator for use in a channel viewed by a user. A second tuner/demodulator 105 having the same function as the first tuner/demodulator 100 may be referred to as a tuner/demodulator for use in the other channel recorded by the user. It should be noted that the number of tuners/demodulators contained in the broadcast signal receiver is not limited to the above described, and may be provided in any number as needed.

In the meantime, a descrambler 110 descrambles the scrambled broadcast stream generated from the first tuner/demodulator 100 or the scrambled broadcast stream generated from a stream storage unit 140 to be described later, and outputs the descrambled broadcast stream. According to system categories, the descrambler 110 may be connected to the broadcast signal receiver via a smart card and interface unit detachably connected to an external part. For reference, the descrambler 110 may bypass a free-of-charge broadcast stream not requiring a descrambling operation to a demultiplexer 115 upon receiving a control signal from the system controller 130.

The demultiplexer 115 divides the broadcast stream descrambled by the descrambler 110 into a video signal, an audio signal, and additional data, etc. A decoder 120 decodes the video signal and the audio signal received from the demultiplexer 115, respectively, and outputs the decoded video signal and the decoded audio signal. Generally, the decoder 120 converts the video signal into RGB-format signals, and outputs the RGB-format signals to an image display system such as a TV. The output format of the video signal may use a composite scheme or a component format, etc.

The system controller 130 controls overall operations of a broadcast signal receiver of the present invention. Particularly, differently from a general broadcast signal receiver, the system controller 130 includes a broadcast stream reproduction restarting request unit 131, a broadcast stream record/reproduction controller 133, and a reproduced stream record/reproduction controller 135. The above-mentioned components contained in the system controller 130 may be configured by dedicated hardware, dedicated software, or any combination thereof. It should be noted that the present invention includes a variety of very large scale integration (VLSI) implementation methods.

In more detail, the broadcast stream record/reproduction controller 133 records a scrambled broadcast stream in a stream storage unit 140, or controls reproduction of the recorded broadcast stream. In this case, if the scrambled record broadcast stream halts reproduction, the broadcast stream record/reproduction controller 133 stores reproduction stop point information in either a memory 145 to be described later or the stream storage unit 140.

Differently from the broadcast stream record/reproduction controller 133, the reproduction stream record/reproduction controller 135 controls the stream storage unit 140 such that the broadcast stream descrambled by the descrambler 110 can be recorded and reproduced.

The broadcast stream record/reproduction controller 133 and the reproduction stream record/reproduction controller 135 generate specific information needed to access a series of record streams when recording the record streams, and store the generated specific information therein.

Provided that the descrambler 110 can be adapted to descramble the record broadcast stream, reproduction of which is halted, the broadcast stream reproduction restarting request unit 131 transmits a request signal to the broadcast stream record/reproduction controller 133 such that the reproduction-halted broadcast stream can be reproduced again from a reproduction stop point. Provided that the descrambler 110 cannot be adapted to descramble the record broadcast stream, the broadcast stream reproduction restarting request unit 131 may request reproduction of a current broadcast stream from the broadcast stream record/reproduction controller 133 if needed.

In accordance with another embodiment of the present invention, if the scrambled record broadcast stream can be scrambled by the descrambler 110 according to a background processing method, the broadcast stream reproduction restarting request unit 131 may request the reproduction restarting of the scrambled record broadcast stream from the broadcast stream record/reproduction controller 133.

For reference, referring to specification information associated with a digital video broadcasting (DVB) system proposed by European Telecommunications Standards Institute (ETSI), if 1-bit free_CA_mode data contained in either a Service Description Table (SDT) or an Event Information Table (EIT) is set to a value of 0, this indicates free-of-charge broadcast data. If 1-bit free_CA_mode data contained in either a Service Description Table (SDT) or an Event Information Table (EIT) is set to a value of 1, this indicates pay-for-use broadcast data. The broadcast service information is demodulated by the first and second tuner/demodulators 100 and 105, and is applied to the system controller 130, such that the broadcast stream reproduction restarting request unit 131 can determine whether broadcast data of a user's current viewing channel is pay-for-use broadcast data or free-of-charge broadcast data by referring to the above free_CA_mode data, and the descrambler 110 can be adapted to descramble the reproduction-halted record broadcast stream according to the determined result.

The stream storage unit 140 is indicative of a recording medium for providing a scrambled broadcast stream and an area capable of storing the descrambled broadcast stream, and includes magnetic and optical recording mediums.

The memory 145 includes a ROM area for storing control data capable of controlling overall system operations and a RAM area for temporarily storing a plurality of data pieces generated during a system control operation, and is accessed by the system controller 130.

The remote-controller receiver 150 receives a radio frequency (RF) signal transmitted from a single remote-controller acting as a user interface, and interfaces the received RF signal with the system controller 130.

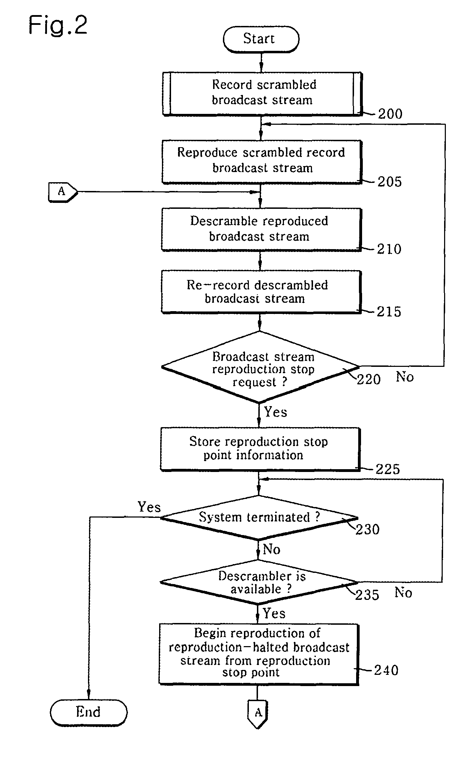

A record control method executable by the above-mentioned broadcast signal receiver will hereinafter be described with reference o Fig. 2.

Referring to Fig. 2. it is assumed that the viewing of first pay-for-use broadcast channel and the recording of second pay-for-use broadcast channel are performed at the same time in accordance with a preferred embodiment of the present invention. According to the above-mentioned assumption, a broadcast stream of the first pay-for-use broadcast channel will be applied to the descrambler 110 via the first tuner/demodulator 100, and a broadcast stream of the first pay-for-use broadcast channel descrambled by the descrambler 110 is sequentially processed by the demultiplexer 115 and the decoder 120, and the processed result is transmitted to an image display system.

A broadcast stream of the second pay-for-use broad channel selected by the second tuner/demodulator 105 is scrambled, and the scrambled broadcast stream of the second pay-for-use broad channel is recorded in the stream storage unit 140 according to a control signal of the broadcast stream record/reproduction controller 133 at step 200. The reason why the broadcast stream of the second pay-for-use broadcast channel is scrambled and recorded in the stream storage unit 140 is that resources for descrambling the broadcast stream, i.e., the descrambler 110, are assigned to a viewing channel.

The above-mentioned scrambled record broadcast stream can be descrambled by a request signal selected by a user when being reproduced at a later time, such that the descrambled record broadcast stream may be recorded in the stream storage unit 140. In more detail, if the broadcast stream record/reproduction controller 133 controls the stream storage unit 140 to reproduce the scrambled record broadcast stream selected by the user at step 205, the record broadcast stream reproduced by the stream storage unit 140 is applied to the descrambler 110 such that it is descrambled by the descrambler 110 at step 210. The descrambled broadcast stream is transmitted to the image display system via the demultiplexer 115, and at the same time is applied to the stream storage unit 140. The broadcast scream descrambled by the descrambler 110 is re-recorded in the stream storage unit 140 by the reproduction stream record/reproduction controller 135. This re-recording operation of the descrambled broadcast stream is referred to as a broadcast stream copy operation.

The scrambled record broadcast stream is reproduced by the broadcast stream record/reproduction controller 133, and is descrambled by the descrambler 110. The descrambled broadcast stream is re-recorded in the stream storage unit 140 by the reproduction stream record/reproduction controller 135, resulting in the creation of a single copy file. If a user who desires to view a broadcast stream of a pay-for-use broadcast channel stops the reproduction operation when creating the above copy file at step 220, the broadcast stream record/reproduction controller 133 stops reproduction of the scrambled record broadcast stream in response to the user's action, and stores information indicative of a reproduction stop point in the memory 145 or the stream storage unit 140, etc. at step 225. In this manner, if the reproduction of the scrambled record broadcast stream is halted, the descrambler 110 can be used again to descramble a broadcast stream of a pay-for-use broadcast channel, such that a user can normally view pay-for-use broadcast data. In this case, the broadcast stream reproduction restarting request unit 131 continues to monitor whether the descrambler 110 is available or not.

If a broadcast channel is changed to another broadcast channel while a user views data of a pay-for-use broadcast channel, and the changed broadcast channel is determined to be a free-of-charge broadcast channel on the basis of the free_CA_mode bit information, the broadcast stream reproduction restarting request unit 131 determines that the descrambler 110 can be used to descramble the reproduction-halted record broadcast stream at step 235. According to the above-mentioned determined result, the broadcast stream reproduction restarting request unit 131 requests the reproduction restarting of the reproduction-halted broadcast stream from the broadcast stream record/reproduction controller 133, and the broadcast stream record/reproduction controller 133 controls the stream storage unit 140 to perform the reproduction operation from the reproduction stop point in response to the above request of the broadcast stream reproduction restarting request unit 131 at step 240. Therefore, the stream storage unit 140 performs the reproduction operation from the reproduction stop point of the scrambled record broadcast stream, the reproduced broadcast stream is descrambled again by the descrambler 110, and the descrambled broadcast stream is re-recorded as a partial copy file, such that a completely descrambled copy file can be created.

In the meantime, the above-mentioned preferred embodiment of the present invention automatically determines whether the descrambler 110 is used to descramble the reproduction-halted record broadcast stream, and uses the descrambler 110 according to the determined result. However, the present invention uses the descrambler 110 even when a reproduction restarting command for the reproduction-halted broadcast stream is received from the user, such that the copying operation of the reproduction-halted record broadcast stream can be continuously performed. In order to restart the copying operation of the record broadcast stream according to a user's command, the user must recognize a reproduction halt state of the record broadcast stream. Therefore, provided that the reproduction of the scrambled record broadcast stream is halted while the scrambled record broadcast stream is copied, it is preferable that the user is notified of the reproduction halt state by a specific message, during the system initialization, or by activation or blinking of an indicator lamp.

In accordance with yet another preferred embodiment of the present invention, the present invention can descramble the scrambled record broadcast stream from a start point according to a background processing method, and at the same time can record the descrambled record broadcast stream in the stream storage unit 140.

In more detail, the broadcast stream record/reproduction controller 133 records the scrambled broadcast stream received from the second tuner/demodulator 105 in the stream storage unit 140, and controls the scrambled broadcast stream recorded in the second tuner/demodulator 105. The broadcast stream reproduction restarting request unit 131 continuously monitors state information of the descrambler 110 such that the scrambled record broadcast stream can be descrambled by the background processing method. In this case, if it is determined that the descrambler 110 can descramble the scrambled record broadcast stream, e.g., if a user views a non-scrambled (i.e., a non-encrypted) broadcast stream, the broadcast stream reproduction restarting request unit 131 requests background reproduction of the scrambled record broadcast stream from the broadcast stream record/reproduction controller 133. The broadcast stream reproduced by the above request of the broadcast stream reproduction restarting request unit 131 is descrambled by the descrambler 110, and the descrambled broadcast stream is re-recorded in the form of a single copy file by the reproduction stream record/reproduction controller 135, such that a completely descrambled copy file can be created by the background processing method.

As apparent from the above description, the present invention provides an apparatus and method for controlling a recording operation, which begins reproduction of a scrambled record file stream from a reproduction stop point at a later time simultaneously with creating a single descrambled copy file although the reproduction of the scrambled record file stream is halted by a user while the scrambled record file is descrambled/copied, such that an improved system, capable of minimizing the number of set manipulations from the viewpoint of the user, minimizing the number of components contained in a system from the viewpoint of a manufacturer of the system, and supporting a variety of functions, can be implemented.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A record control method for use in a broadcast signal receiver including a stream storage unit comprising the steps of:
a) reproducing a scrambled record broadcast stream, and descrambling the reproduced broadcast stream using a descrambler;
b) recording the descrambled broadcast stream as a copy file;
c) stopping reproduction of the broadcast stream according to a user's request, and storing information indicative of a stop point of the reproduction; and
d) starting reproduction of the reproduction-halted broadcast stream from the reproduction stop point to acquire a stream, descrambling the acquired stream using the descrambler, and recording the descrambled broadcast stream as a part of the copy file.

2. The method according to claim 1, wherein the step (d) is automatically performed when the descrambler can be used to descramble the reproduction-halted record broadcast stream.

3. The method according to claim 1, wherein the step (d) is performed in response to a reproduction restarting command of the reproduction-halted broadcast stream.

4. A record control method for use in a broadcast signal receiver capable of receiving a broadcast stream comprising the steps of:
a) receiving a scrambled broadcast stream, and recording the received scrambled broadcast stream in a stream storage unit;
b) descrambling, by a descrambler, the scrambled broadcast stream recorded in the stream storage unit according to a background processing method; and
c) recording the descrambled broadcast stream as a copy file.

5. A record control apparatus for use in a broadcast signal receiver including a stream storage unit comprising:
a broadcast stream record/reproduction controller for controlling recording/reproducing operations of a scrambled broadcast stream, and storing information indicative of a reproduction stop point when reproduction of the scrambled record broadcast stream is halted;
a descrambler for descrambling a reproduced broadcast stream;
a reproduction stream record/reproduction controller for controlling recording/reproducing operations of the broadcast stream descrambled by the descrambler; and
a broadcast stream reproduction restarting request unit for requesting a reproduction restarting operation of the reproduction-halted broadcast stream from the reproduction stop point when the descrambler can be used to descramble the reproduction-halted record broadcast stream.

6. The apparatus according to claim 5, wherein the broadcast stream reproduction restarting request unit receives a reproduction restarting command of the reproduction-halted broadcast stream from a user interface, and requests a reproduction restarting operation of the reproduction-halted broadcast stream from the reproduction stop point in response to the received reproduction restarting command.

7. The apparatus according to one of claims 5 and 6, wherein the broadcast signal receiver is indicative of a set top box (STB) capable of receiving a broadcast signal.

8. The apparatus according to one of claims 5 and 6, wherein the broadcast signal receiver is indicative of a set top box (STB) capable of selecting broadcast signals of different channels at the same time.

9. A record control apparatus for use in a broadcast signal receiver including a stream storage unit comprising:
a broadcast stream record/reproduction controller for controlling recording/reproducing operations of a scrambled broadcast stream, and storing information indicative of a reproduction stop point when reproduction of the scrambled record broadcast stream is halted;
a descrambler for descrambling a reproduced broadcast stream;
a reproduction stream record/reproduction controller for controlling recording/reproducing operations of the broadcast stream descrambled by the descrambler; and
a broadcast stream reproduction restarting request unit for requesting a reproduction restarting operation of the scrambled record broadcast stream when the descrambler can be used to descramble the scrambled record broadcast stream according to a background processing method.
